# EUROPEAN PATENT APPLICATION

(11) **EP 2 056 329 A2**
(43) Date of publication of application: **06.05.2009**
(21) Application number: 08168309.6
(22) Date of filing: 04.11.2008
(51) Int. Cl.: H01J 17/49, H01J 17/04, H01J 9/02

(54) **Dielectric Material for Plasma Display Panel, and method of preparing the same**

(30) Priority: 05.11.2007 KR 20070112299
(71) Applicant: Samsung SDI Co., Ltd., Suwon-si, Gyeonggi-do 442-390 (KR)
(72) Inventor: Yoo, Sung-Hune c/o Legal & IP Team Samsung SDI Co., Ltd, Yeongtong-gu Suwon-si Gyeonggi-do (KR)
(74) Representative: Killin, Stephen James

(57) **Abstract**

A dielectric material for a plasma display panel (PDP) device, a PDP device including the same, and a method of manufacturing the PDP device are taught. The dielectric material includes at least three materials selected from the group consisting of Bi₂O₃, BaO, SiO₂, B₂O₃, ZnO, and Al₂O₃, and a coloring agent Mn₂O₃. The dielectric material for a PDP device is environmental-friendly due to being PbO-free, is easily sintered at a relatively low temperature, may be prevented from yellowing by prohibiting the reduction of Ag ions, and may have enhanced light room contrast by effectively reducing external light reflection luminance and thus minimizing luminance reduction.

## Description

The present invention relates to a dielectric material for a plasma display panel (PDP), a process for preparing the same and a plasma display panel (PDP) device containing the same, and more particularly, to a PDP device including a lead-free colored dielectric material which may reduce external light reflection.

A display device forms variable visual display images of moving or still objects based upon its reception of a video signal. The demands of consumers and original equipment manufacturers necessitate a large screen of the display device. Display devices must be increased in the area of the screen. In response to these demands, a plasma display panel (PDP) device has been developed. Plasma display panels may be conveniently used to form large screens, and have good display qualities because of their self-emission characteristic and quick response rate. In addition, PDP devices may be formed in a thin configuration, similar to that of liquid crystal display (LCD) devices, and are suitable as wall-mounted displays.

In contemporary PDP devices, a glow discharge occurs when a predetermined voltage is applied to two electrodes formed in a sealed space filled by a discharge gas, and thus, the PDP devices display images by the exciting of phosphor layers, formed in a predetermined pattern, with ultraviolet rays that are generated by the glow discharge.

PDP devices may be classified, according to the driving methods, into direct current PDP devices, alternating current PDP devices, and hybrid PDP devices. PDP devices may be further classified into those having a minimum of two electrodes and those having a minimum of three electrodes. The direct current PDP device includes an auxiliary anode in order to induce auxiliary discharge. The alternating current PDP device includes address electrodes that increase addressing speed by performing an address discharge and a sustain discharge separately.

Alternating current PDP devices may be divided into those with an opposing discharge electrode structure and those with a surface discharge electrode structure according to the disposition of the electrodes, which form discharge. In the PDP devices having the opposing discharge electrode structure, a discharge occurs in a direction perpendicular to the PDP device by positioning two sustain electrodes which form discharge on a front substrate and a rear substrate, respectively. In the PDP devices having the surface discharge electrode structure, a discharge occurs on one surface of a substrate by having two sustain electrodes on the same substrate.

A contemporary PDP device includes a front substrate at an upper part thereof, and pairs of sustain electrodes, each pair of which has predetermined width and height and includes a common electrode and a scan electrode, is formed on a bottom surface of the front substrate.

A pair of bus electrodes to which a voltage is applied are respectively formed on a bottom surface of the pair of sustain electrodes. The sustain electrodes and the bus electrodes are covered by a front dielectric layer, and a protective layer is formed on a bottom surface of the front dielectric layer. In addition, a rear substrate is disposed to face front substrate, and address electrodes having predetermined width and height are formed on rear substrate, and address electrodes are covered by a rear dielectric layer.

In addition, barrier ribs, which define discharge spaces and prevent cross-talk between the adjacent discharge spaces, are formed on a top surface of rear dielectric layer. The discharge spaces are filled by discharge gas, and each discharge space includes a phosphor layer that may be formed by any one of red, green and blue phosphors in order to display images with different colors.

In addition, when an AC voltage that is applied to the pair of sustain electrodes, which form discharge sustain electrode poles, reaches a discharge initiation voltage, an electric force line is generated and an inert gas is dissociated into electrons and ions by the electric force line. Then, the electrons and ions are recombined to emit ultraviolet rays and phosphor layer irradiated by the UV rays radiates. Phosphor layer then generates visible lights.

A contemporary dielectric layer includes PbO in a glass frit, which is glass with a low melting point. Due to environmental regulations, however, it is desired that a dielectric layer be formed of a material that is PbO-free. Korean Patent Publication No. 2002-33006 discloses a plasma display panel including a transparent dielectric layer formed of lead-free glass comprising BaO, B₂O₃, and ZnO as a main component.

Because of the elimination of the usage of PbO, however, a sintering temperature of the dielectric layer may be increased. In addition, by using alkali metal oxides, ions are diffused in an Ag electrode, and thereby reduction in the form of a colloid is facilitated, resulting in yellowing of the dielectric layer.

In accordance with a first aspect of the present invention, there is provided a dielectric material for a plasma display panel (PDP) device, including at least three materials selected from the group consisting of Bl₂O₃, BaO, SiO₂, B₂O₃, ZnO, and Al₂O₃, and Mn₂O₃ as a coloring agent.

In accordance with a second aspect of the present invention, there is provided a plasma display panel (PDP) device, comprising a front dielectric layer and a rear dielectric layer, the front dielectric layer being a lead-free dielectric layer comprising a dielectric material according to the present invention in its first aspect. In an embodiment, the plasma display panel (PDP) device includes: a front substrate; pairs of sustain electrodes disposed on the front substrate at a predetermined interval apart from each other; a front dielectric layer covering the pairs of sustain electrodes; a rear substrate disposed to face to the front substrate; address electrodes disposed on the top surface of the rear substrate to cross the sustain electrodes; a rear dielectric layer covering the address electrodes; barrier ribs formed between the front substrate and the rear substrate, the barrier ribs defining discharge spaces; phosphor layers formed in the discharge spaces, wherein the front dielectric layer is a lead-free dielectric layer including at least three selected from the group consisting of Bi₂O₃, BaO, SiO₂, B₂O₃, ZnO, and Al₂O₃, and including Mn₂O₃ as a coloring agent. In another embodiment, the thickness of the front dielectric layer of the PDP device is in the range of 20 µm to 50 µm. In a further embodiment, the front dielectric layer of the PDP device, which is lead-free, includes a composition selected from the group consisting of BaO-SiO₂-B₂O₃, BaO-SiO₂-ZnO, BaO-Al₂O₃-ZnO, BaO-Al₂O₃-B₂O₃, BaO-SiO₂-ZnO-B₂O₃, SiO₂-B₂O₃-ZnO, SiO₂-B₂O₃-Al₂O₃, SiO₂-ZnO-Al₂O₃, B₂O₃-ZnO-Al₂O₃, Bi₂O₃-BaO-SiO₂, Bi₂O₃-BaO-B₂O₃, Bi₂O₃-SiO₂-ZnO, Bi₂O₃-BaO-SiO₂-B₂O₃, and Bl₂O₃-BaO-ZnO-B₂O₃.

In accordance with a third aspect of the present invention, there is provided a method of manufacturing a plasma display panel (PDP) device, the method comprising the steps of forming a front dielectric layer and forming a rear dielectric layer, the front dielectric layer being a lead-free dielectric layer comprising a dielectric material according to the present invention in its first aspect. In an embodiment, the method includes the steps of preparing a front substrate on which pairs of sustain electrodes are disposed at a predetermined interval apart from each other; forming a front dielectric layer to cover the pairs of sustain electrodes; preparing a rear substrate to face the front substrate; forming address electrodes on the top surface of the rear substrate to cross the pairs of sustain electrodes; forming a rear dielectric layer to cover the address electrodes; forming barrier ribs between the front substrate and the rear substrate, the barrier ribs defining discharge spaces; and forming phosphor layers in the discharge spaces, wherein the front dielectric layer is a lead-free dielectric layer comprising at least three selected from the group consisting of Bi₂O₃, BaO, SiO₂, B₂O₃, ZnO, and Al₂O₃, and including Mn₂O₃ as a coloring agent.

In accordance with a fourth aspect of the present invention, there is provided the use of a dielectric material according to the present invention in its first aspect for a dielectric layer of a plasma display panel (PDP).

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIGURE 1 is a view of a contemporary plasma display panel device; and

FIGURE 2 is an exploded perspective view of a plasma display panel device constructed as an embodiment of the present invention.

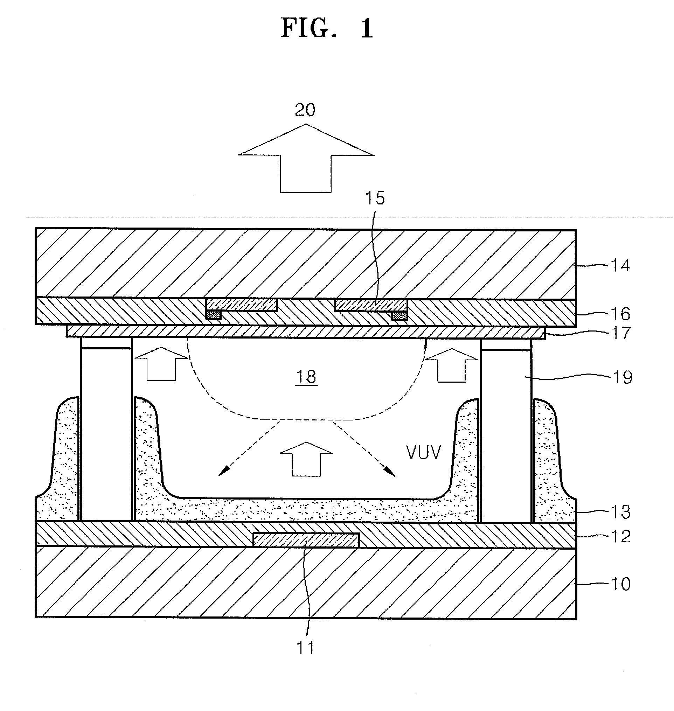

FIGURE 1 is a view of a contemporary PDP device. Referring to FIGURE 1, the contemporary PDP device includes a front substrate 14 at an upper part thereof, and pairs of sustain electrodes 15, each pair of which has predetermined width and height and includes a common electrode and a scan electrode, is formed on a bottom surface of front substrate 14.

A pair of bus electrodes 21 to which a voltage is applied are respectively formed on a bottom surface of the pair of sustain electrodes 15. Sustain electrodes 15 and bus electrodes 21 are covered by a front dielectric layer 16, and a protective layer 17 is formed on a bottom surface of the front dielectric layer 16. In addition, a rear substrate 10 is disposed to face to front substrate 14, and address electrodes 11 having predetermined width and height are formed on rear substrate 10, and address electrodes 11 are covered by a rear dielectric layer 12.

In addition, barrier ribs 19, which define discharge spaces and prevent cross-talk between the adjacent discharge spaces, are formed on a top surface of rear dielectric layer 12. Discharge spaces 18 are filled by discharge gas, and each discharge space includes a phosphor layer 13 that may be formed by any one of red, green and blue phosphors in order to realize colors.

In addition, when an AC voltage that is applied to the pair of sustain electrodes 15, which form discharge sustain electrode poles, reaches a discharge initiation voltage, an electric force line is generated and an inert gas is dissociated into electrons and ions by the electric force line. Then, the electrons and ions are recombined to emit ultraviolet rays and phosphor layer 13 irradiated by the UV rays radiates. Phosphor layer 13 then generates visible lights 20.

A contemporary dielectric layer includes PbO in a glass frit, which is glass with a low melting point. Due to environmental regulations, however, it is desired that a dielectric layer be formed of a material that is PbO free. Korean Patent Publication No. 2002-33006 discloses a plasma display panel including a transparent dielectric layer formed of lead-free glass comprising BaO, B₂O₃, and ZnO as a main component.

Because of the elimination of the usage of PbO, however, a sintering temperature of the dielectric layer may be increased. In addition, by using alkali metal oxides, ions are diffused in an Ag electrode, and thereby reduction in the form of a colloid is facilitated, resulting in yellowing of the dielectric layer.

The present invention provides a dielectric material for a plasma display panel (PDP) device, comprising at least three materials selected from the group consisting of Bi₂O₃, BaO, SiO₂, B₂O₃, ZnO, and Al₂O₃, and Mn₂O₃ as a coloring agent.

A contemporary dielectric material uses PbO, however, the dielectric material constructed as the present invention may includes at least three selected from the group consisting of Bi₂O₃, BaO, SiO₂, B₂O₃, ZnO, and Al₂O₃, as a composition of a lead-free dielectric material which does not use PbO. In particular, the dielectric material may preferably include at least three materials in amounts selected from the group consisting of 38 to 50 wt% of Bi₂O₃, 5 to 19 wt% of BaO, 0.1 to 5 wt% of SiO₂, 13 to 25 wt% of B₂O₃, 15 to 32 wt% of ZnO, and 0.1 to 8.5 wt% of Al₂O₃. Within these ranges described above, a softening temperature of the dielectric material is appropriate in the preparation process, and transmittance, haze, luminance, and the like of the PDP may be excellent. The term "wt%" here refers to a percentage by weight.

In addition, the dielectric material includes a coloring agent in order to reduce external light reflection luminance. The coloring agent includes Mn₂O₃ as an essential component, and the amount of Mn₂O₃ may be in the range of 0.1 to 0.8 wt% based on 100 wt% of the dielectric material. When the amount of Mn₂O₃ is less than 0.1 wt% based on 100 wt% of the dielectric material, the effect of coloring is degraded so that external light reflection luminance may be increased, on the other hand, when the amount of Mn₂O₃ is greater than 0.8 wt% based on 100 wt% of the dielectric material, the degree of coloring is too high, and thus light transmittance of the dielectric material may be reduced and the transmittance of glass itself may be also reduced.

The coloring agent may further include at least one material selected from the group consisting of CoO, NiO, CuO, and CeO₂. In particular, the coloring agent may includes at least one material in an amount selected from the group consisting of 0.4 to 1.0 wt% of CoO, 0.05 to 0.3 wt% of NiO, 0.15 to 0.45 wt% of CuO, and 0.1 to 0.7 wt% of CeO₂.

The dielectric material, including the coloring agents as described above, absorbs a predetermined amount of light that is incident from the exterior, thereby effectively reducing external light reflection luminance. At the same time, the dielectric material minimizes luminance reduction from internal pixels, thereby enhancing light room contrast.

In addition, bus electrodes that are disposed on a front substrate generally includes Ag as a main component, and the bus electrodes are covered by a dielectric layer. The dielectric layer is prepared by coating the dielectric material to cover the bus electrodes, and then sintering the dielectric material at approximately 500°C to 600°C. In this process, Ag+ ions, generated when the Ag bus electrodes are formed, are diffused into the dielectric layer disposed on the front substrate, and thereby resulting in the formation of circular colloids. Since Ag+ ions are generated from the Ag bus electrodes, a lot of circular colloids are distributed around the Ag bus electrodes.
Therefore, the circular Ag colloids visually look yellow, and this is referred to as yellowing of electrodes of the PDP device.

As described above, when the dielectric layer where is PbO-free is used, the Ag+ ions, which are diffused in the process of forming the dielectric layer to cover the Ag bus electrodes, are bound to electrons therearound to be reduced, thereby resulting in the formation of colloids. As a result, yellowing of the dielectric layer may occur, and such yellowing phenomenon may cause image quality reduction by decreasing color temperature, when a screen is displayed with white color.

According to the present invention, by forming the dielectric material including the coloring agent, the colloids generated by the Ag+ ions diffused after the sintering of the dielectric layer are significantly decreased because the amount of the Ag+ ions that are reduced to AgO is significantly reduced in a reduction atmosphere. A reduction atmosphere may be hydrogen rich. In the dielectric material including the coloring agent constructed as the present invention, the metal ion of a metal oxide is reduced in advance before Ag+ is reduced by the transition of valence electron of the metal ion. Therefore, electrons around the Ag+ ions are decreased so that the reduction of the Ag+ ions may be prevented. As a result, the yellowing of the dielectric layer may be prevented.

The present invention also provides a PDP device including a front substrate; sustain electrodes disposed on the front substrate at a predetermined interval; a front dielectric layer covering the sustain electrodes; a rear substrate disposed to face the front substrate; address electrodes disposed on the rear substrate to cross the sustain electrodes; a rear dielectric layer covering the address electrodes; barrier ribs formed between the front substrate and the rear substrate, the barrier ribs defining discharge spaces; phosphor layers formed in the discharge spaces, wherein the front dielectric layer is a lead-free dielectric layer including at least three materials selected from the group consisting of Bi₂O₃, BaO, SiO₂, B₂O₃, ZnO, and Al₂O₃, and Mn₂O₃ as a coloring agent.

The color of the colored front dielectric layer may be maintained complementary to the color of the rear dielectric layer in accordance with subtractive color mixing theory, which is performed to make various colors by subtracting any one of the color elements from white. In subtractive color mixing theory, mixtures of predetermined materials may either absorb or subtract predetermined wavelengths from the filtered or reflected lights. The subtractive primary colors are cyan, yellow and magenta. The three primary colors of pigment are magenta, yellow, and cyan. Herein, when two colors that are complementary to each other are mixed, the two colors become an achromatic color such as gray or black. The mixing of the two colors may be done between two colors such as red and blue, green and orange, or the like. Also, the mixing of the two colors may be done between one of the three primary colors of pigment and other colors, and examples of the mixing of the two colors that are complementary to each other are numerous. In the subtractive color mixing theory, the more that the two colors that are complementary to each other are mixed, the more the brightness and chromaticity are reduced, the mixing of two colors that are close to each other in a color circle produces a secondary color, the mixing of two colors that are distant from each other in the color circle produces a color with reduced brightness and chromaticity and such color is close to gray, and the mixing of the two colors that are complementary to each other produces a color close to black. By maintaining the complementary relationship between colors due to the subtractive color mixing theory, external light reflection luminance may be reduced, and light room contrast may be improved. The subtractive color mixing implemented in the practice of this invention by determining the color of a colored front dielectric layer. A color of the front dielectric layer and a color of the rear dielectric layer are complementary to each other, and are combined to provide a color of white.

The dielectric material may include at least three materials in amounts selected from the group consisting of 38 to 50 wt% of Bi₂O₃, 5 to 19 wt% of BaO, 0.1 to 5 wt% of SiO₂, 13 to 25 wt% of B₂O₃, 15 to 32 wt% of ZnO, and 0.1 to 8.5 wt% of Al₂O₃.

In addition, the dielectric material includes a coloring agent in order to reduce external light reflection luminance. The coloring agent includes Mn₂O₃ as an essential component, and the amount of Mn₂O₃ may be in the range of 0.1 to 0.8 wt% based on 100 wt% of the dielectric material. When the amount of Mn₂O₃ is less than 0.1 wt% based on 100 wt% of the dielectric material, the effect of coloring is degraded so that external light reflection luminance is increased, on the other hand, when the amount of Mn₂O₃ is greater than 0.8 wt% based on 100 wt% of the dielectric material, the degree of coloring is too high, and thus light transmittance of the dielectric material is reduced and transmittance of the glass itself is also reduced.

The coloring agent may further include at least one material selected from the group consisting of CoO, NiO, CuO, and CeO₂. In particular, the coloring agent may include at least one material in an amount selected from the group consisting of 0.4 to 1.0 wt% of CoO, 0.05 to 0.3 wt% of NiO, 0.15 to 0.45 wt% of CuO, and 0.1 to 0.7 wt% of CeO₂.

The dielectric material including the coloring agents as described above absorbs a predetermined amount of light that is incident from the outside, thereby effectively reducing external light reflection luminance. At the same time, the dielectric material minimizes luminance reduction from inside pixels, thereby enhancing light room contrast.

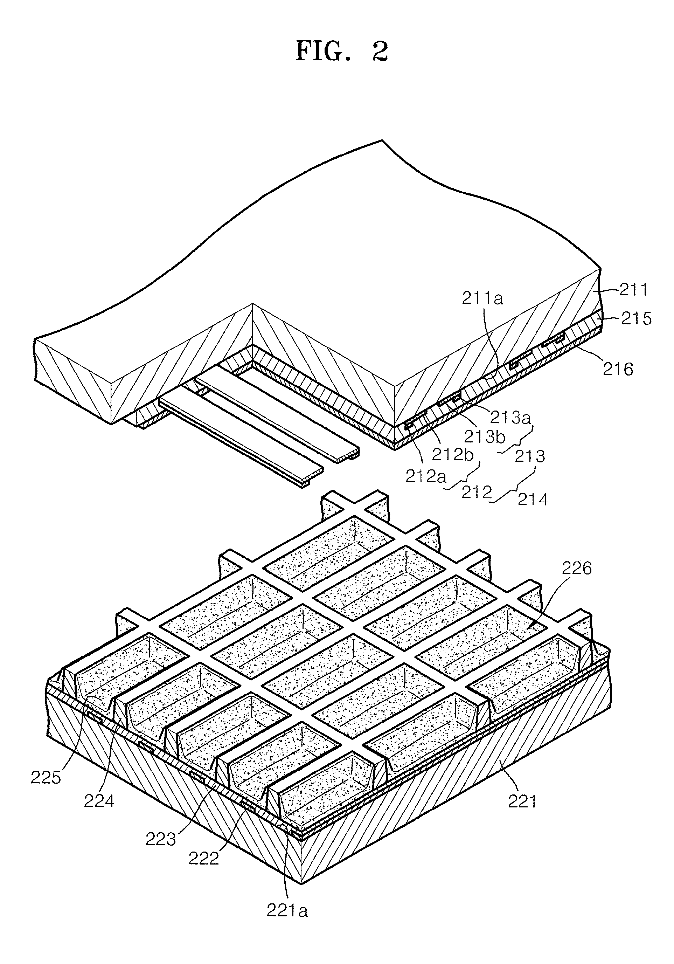

FIGURE 2 is an exploded perspective view of a PDP device constructed as an embodiment of the present invention. Referring to FIGURE 2, the PDP includes a front substrate 211 formed of glass or a transparent material and a rear substrate 221 disposed to face front substrate 211. The PDP device includes pairs of sustain electrodes 214 including sustain electrode 212 and 213 that are disposed on a bottom surface of front substrate 211, wherein each pair of sustain electrodes 214 includes transparent electrodes 212b and 213b on which bus electrodes 212a and 213a are respectively formed on a bottom surface of transparent electrodes 212b and 213b. Sustain electrodes 214 may be formed of a transparent conductive material such as ITO, and may be formed in various forms, for example, in the form of a strip. Discharge spaces 226 are filled by discharge gas.

In addition, bus electrodes 212a and 213a, which have a smaller width compared to that of transparent electrodes 212b and 213b, respectively and are formed of a conductive material, are respectively formed on the bottom surface of transparent electrodes 212b and 213b. Herein, bus electrodes 212a and 213a may be formed of a high conductive metal material, that is, a conductive material using Ag paste as a main component as described above. Alternatively, bus electrodes 212a and 213a may be omitted from the PDP device.

Sustain electrodes 214 are covered by a front dielectric layer 215 disposed on the bottom surface of front substrate 211. In addition, a protective layer 216, for example, an MgO film is further formed on a bottom surface of front dielectric layer 215.

Address electrodes 222 are disposed on the top surface of rear substrate 221, and address electrodes 222 are covered by rear dielectric layer 223.

Address electrodes 222 are formed in the form of a strip, crossing bus electrodes 212a and 213a, and are disposed spaced apart from each other at a predetermined interval.

Barrier ribs 224 are formed on the top surface of rear dielectric layer 223 to be separated from each other at a predetermined interval, and define discharge spaces disposed between the front substrate 211 and rear substrate 221.

In detail, barrier ribs 224 have predetermined height and width, and are disposed in parallel to address electrodes 222, such that one of address electrodes 222 is disposed between two adjacent barrier ribs 224. Sustain electrodes 214 extend corresponding to each discharge cell, such that there is a discharge gap between sustain electrodes 214. The barrier ribs however are not limited to the ones of the present invention, and thus, the barrier ribs can have any structure that defines the discharge spaces according to a pixel arrangement pattern.

Phosphor layers 225 are respectively formed in the discharge spaces defined by barrier ribs 224. Phosphor layers 225 are formed on the inner walls of barrier ribs 224 and the top surface of rear dielectric layer 223.

Phosphor layers 225 use red, green and blue phosphors in order to display images having different colors, and according to the color of the phosphor, phosphor layers 225 may be classified into a red phosphor layer, a green phosphor layer, and a blue phosphor layer. The red, green and blue phosphor layers are disposed adjacent to each other to make a group composed of the three colors.

In an embodiment, the present invention also provides a method of manufacturing a PDP device, the method including: preparing a front substrate on which pairs of sustain electrodes are disposed at a predetermined interval; forming a front dielectric layer to cover the sustain electrodes; preparing a rear substrate disposed to face the front substrate; forming address electrodes on the rear substrate to cross the sustain electrodes; forming a rear dielectric layer to cover the address electrodes; forming barrier ribs between the front substrate and the rear substrate, the barrier ribs defining discharge spaces; and forming phosphor layers formed in the discharge spaces, wherein the front dielectric layer is a lead-free dielectric layer including at least three materials selected from the group consisting of Bi₂O₃, BaO, SiO₂, B₂O₃, ZnO, and Al₂O₃, and includes Mn₂O₃ as a coloring agent.

The color of the colored front dielectric layer may be complementary to the color of the rear dielectric layer, wherein the complementary colors are obtained by subtractive color mixing theory. In addition, the dielectric material includes a coloring agent in order to reduce external light reflection luminance. The coloring agent includes Mn₂O₃ as an essential component, and the amount of Mn₂O₃ may be in the range of 0.1 to 0.8 wt% based on 100 wt% of the dielectric material. When the amount of Mn₂O₃ is less than 0.1 wt% based on 100 wt% of the dielectric material, the effect of coloring is degraded so that external light reflection luminance is increased, on the other hand, when the amount of Mn₂O₃ is greater than 0.8 wt% based on 100 wt% of the dielectric material, the degree of coloring is too high, and thus light transmittance of the front dielectric layer is reduced and transmittance of glass itself is also reduced.

The coloring agent may further include at least one material selected from the group consisting of CoO, NiO, CuO, and CeO₂. In particular, the amount of the coloring agent added may be at least one amount selected from the group consisting of 0.4 to 1.0 wt% of CoO, 0.05 to 0.3 wt% of NiO, 0.15 to 0.45 wt% of CuO, and 0.1 to 0.7 wt% of CeO₂.

The front dielectric layer may include at least three materials in an amount selected from the group consisting of 38 to 50 wt% of Bi₂O₃, 5 to 19 wt% of BaO, 0.1 to 5 wt% of SiO₂, 13 to 25 wt% of B₂O₃, 15 to 32 wt% of ZnO, and 0.1 to 8.5 wt% of Al₂O₃.

### Examples

### Example 1

### (1) Preparation of a rear substrate

Six parts by weight of ethyl cellulose as a binder was dissolved in 100 parts by weight of a mixed solvent of butyl carbitol acetate and terpineol with a mixing weight ratio of 3:7, and BaMgAl₁₀O₁₇:Eu as a blue phosphor was added thereto and mixed together to prepare a phosphor slurry. The prepared phosphor slurry was coated on inner walls of discharge cells defined by barrier ribs disposed on a rear substrate, and then, the rear substrate, coated with the phosphor slurry, was dried and sintered at 120°C to form a blue phosphor layer.

In addition, phosphor layers formed of (Y,Gd)BO₃:Eu and phosphor layers formed of ZnSiO₄:Mn were respectively formed in red discharge cells and green discharge cells in the same manner as in the forming of the blue phosphor layer described above. As a result, the preparation of the rear substrate was completed.

### (2) Preparation of a front substrate

Ethyl cellulose as a binder was dissolved in a mixed solvent of butyl carbitol acetate and terpineol with a mixing weight ratio of 3:7. In addition, a lead-free glass component including 42.5 wt% of Bi₂O₃, 4 wt% of SiO₂, 16 wt% of B₂O₃, 28 wt% of ZnO, and 6.97 wt% of Al₂O₃ and a coloring agent (0.6 wt% of CeO₂, 0.63 wt% of Mn₂O₃, 0.9 wt% of CoO, 0.4 wt% of CuO) were added to the mixed solvent in which the binder was dissolved and mixed together to prepare a slurry for a dielectric material with a solid content of 75%. The prepared slurry as a dielectric material was coated on electrode layers formed on a front substrate to form a dielectric layer with a thickness of 30 µm. MgO was deposited on the dielectric layer, which was transparent, by physical vapor deposition (PVD) to form an MgO protective layer. As a result, the preparation of the front substrate was completed.

### (3) Panel assembly

The prepared rear substrate and front substrate were assembled, joined together, ventilated, injected with gases, and aged to manufacture a PDP device.

### Example 2

A PDP device was manufactured in the same manner as in Example 1, except that a lead-free glass component including 47 wt% of Bi₂O₃, 0.87 wt% of SiO₂, 21.5 wt% of B₂O₃, 20.5 wt% of ZnO, 4.6 wt% of BaO, 3 wt% of Al₂O₃, and 2.53 wt% of the coloring agent(0.6 wt% of CeO₂, 0.63 wt% of Mn₂O₃, 0.9 wt% of CoO, 0.4 wt% of CuO).

### Comparative Example 1 (Pb-based)

A PDP device was manufactured in the same manner as in Example 1, except that a Pb-based glass component comprising 52 wt% of PbO, 8.3 wt% of SiO₂, 21.5 wt% of B₂O₃, 9 wt% of BaO, 6.5 wt% of Al₂O₃, and 2.7 wt% of an additive was used. The additive is a coloring agent including Mn₂O₃.

### Comparative Example 2 (non-Pb based)

A PDP device was manufactured in the same manner as in Example 1, except that a non-Pb based glass component including 15 wt% of Bi₂O₃, 7 wt% of SiO₂, 21 wt% of B₂O₃, 34 wt% of ZnO, 22.95 wt% of BaO, and 0.05 wt% of Al₂O₃ was used and the coloring agent was not used.

Softening temperature (Ts) of dielectric material compositions of Examples 1 and 2 and Comparative Examples 1 and 2, and transmittance, haze, luminance, external light reflection luminance and presence of yellowing of the PDP of Examples 1 and 2 and Comparative Examples 1 and 2 were measured. The results are shown in Table 1 below. Unit cd/m² refers to candela per meter squared.

**Table 1**

| | Softening temperature (Ts) (°C) | Transmit tance (%T) | Haze (%) | luminance (cd/m²) | External light reflection luminance (cd/m²) | Yellowing |
|---|---|---|---|---|---|---|
| Comparative Example 1 | 560 | 78 | 12 | 220 | 11.2 | no |
| Comparative Example 2 | 585 | 68 | 23 | 203 | 11.9 | generation |
| Example 1 | 565 | 79 | 10.8 | 225 | 10.9 | no |
| Example 2 | 570 | 79 | 9.5 | 219 | 11.3 | no |

From the results, it may be seen that the dielectric material compositions of Examples 1 and 2 exhibit the similar properties as those of the dielectric material compositions of Comparative Examples 1 and 2, even though eliminating the usage of Pb.

According to the present invention, as show in Example 2, the dielectric material for a PDP device is environmental-friendly because of the elimination of the presence and usage of PbO, is easily sintered at a relatively low temperature, may be prevented from yellowing by prohibiting the reduction of Ag ions, and can have enhanced light room contrast by effectively reducing external light reflection luminance and minimizing luminance reduction at the same time.

While the present invention has been particularly shown and described with reference to certain exemplary embodiments thereof, it will be understood by one of ordinary skill in the art that various changes in form and details may be made therein without departing from the scope of the present invention as defined by the following claims.

## Claims

1. A dielectric material for a plasma display panel (PDP) device, comprising:
at least three materials selected from the group consisting of Bi₂O₃, BaO, SiO₂, B₂O₃, ZnO, and Al₂O₃; and
a coloring agent comprising Mn₂O₃.

2. The dielectric material of claim 1, in which the amount of Mn₂O₃ is in the range of 0.1 wt% to 0.8 wt%.

3. The dielectric material of claims 1 or 2, in which the coloring agent further comprises at least one material selected from the group consisting of CoO, NiO, CuO, and CeO₂.

4. The dielectric material of claim 3, in which the coloring agent comprises at least one material in an amount selected from the group consisting of 0.4 wt% to 1.0 wt% of CoO, 0.05 wt% to 0.3 wt% of NiO, 0.15 wt% to 0.45 wt% of CuO, and 0.1 wt% to 0.7 wt% of CeO₂.

5. The dielectric material of any one of claims 1 to 4, comprising at least three materials in amounts selected from the group consisting of 38 wt% to 50 wt% of Bi₂O₃, 5 wt% to 19 wt% of BaO, 0.1 wt% to 5 wt% of SiO₂,13 wt% to 25 wt% of B₂O₃, 15 wt% to 32 wt% of ZnO, and 0.1 wt% to 8.5 wt% of Al₂O₃.

6. A plasma display panel (PDP) device, comprising a front dielectric layer and a rear dielectric layer, the front dielectric layer being a lead-free dielectric layer comprising a dielectric material as claimed in any one of claims 1 to 5.

7. The PDP device of claim 6, in which the color of the front dielectric layer and the color of the rear dielectric layer are complementary to each other, and are combined to provide the color of white.

8. The PDP device of claims 6 or 7, in which the thickness of the front dielectric layer is in the range of 20 µm to 50 µm.

9. The PDP device of claims 6, 7 or 8, in which the front dielectric layer, which is lead-free, includes a composition selected from the group consisting of BaO-SiO₂-B₂O₃, BaO-SiO₂-ZnO, BaO-Al₂O₃-ZnO, BaO-Al₂O₃-B₂O₃, BaO-SiO₂-ZnO-B₂O₃, SiO₂-B₂O₃-ZnO, SiO₂-B₂O₃-Al₂O₃, SiO₂-ZnO-Al₂O₃, B₂O₃-ZnO-Al₂O₃, Bi₂O₃-BaO-SiO₂, Bi₂O₃-BaO-B₂O₃, Bi₂O₃-SiO₂-ZnO, Bi₂O₃-BaO-SiO₂-B₂O₃, and Bi₂O₃-BaO-ZnO-B₂O₃.

10. A method of manufacturing a plasma display panel (PDP) device, the method comprising the steps of forming a front dielectric layer and forming a rear dielectric layer, the front dielectric layer being a lead-free dielectric layer comprising a dielectric material as claimed in any one of claims 1 to 5.

11. The method of claim 10, in which the color of the front dielectric layer and the color of the rear dielectric layer are complementary to each other, and are combined to provide a color of white.

12. A plasma display panel (PDP) device as claimed in 6, comprising:
a front dielectric layer covering a plurality of sustain electrodes disposed on a front substrate, with a color of the front dielectric layer and a color of a rear dielectric layer being complementary to each other and being combined to provide a color of white, and with the rear dielectric layer covering a plurality of address electrodes disposed on a surface of a rear substrate; and
the colored front dielectric layer being a lead-free dielectric layer comprising at least three materials selected from a group consisting of Bi₂O₃, BaO, SiO₂, B₂O₃, ZnO, and Al₂O₃, and a color agent comprising Mn₂O₃.

13. Use of a dielectric material as claimed in any one of claims 1 to 5 for a dielectric layer of a plasma display panel (PDP).
